# FASCICULE DE BREVET EUROPEEN

(11) **EP 1 970 148 B1**
(45) Date de publication et mention de la délivrance du brevet: **24.02.2010**
(21) Numéro de dépôt: 07290324.8
(22) Date de dépôt: 16.03.2007
(51) Int. Cl.: B23B 49/02

(54) **Guide de perçage consommable**
Selbstverzehrende Bohrführung
Expendable drilling guide

(43) Date de publication de la demande: 17.09.2008
(73) Titulaire: Menu, Daniel, 75011 Paris (FR); Ravenach, Antony, 75014 Paris (FR)
(72) Inventeur: Menu, Daniel, 75011 Paris (FR); Ravenach, Antony, 75014 Paris (FR)
(74) Mandataire: Orsini, Fabienne

(56) Documents cités:
- DE-A1- 4 303 318
- DE-U1- 7 711 678
- FR-A- 2 884 160
- FR-A1- 2 251 397
- GB-A- 213 145
- GB-A- 2 313 563
- NL-C2- 1 014 667
- US-A1- 2003 059 267
- US-A1- 2006 013 662

## Description

### DOMAINE TECHNIQUE AUQUEL SE RAPPORTE L'INVENTION

La présente invention concerne de manière générale la réalisation d'un trou de perçage.

Elle concerne plus particulièrement un guide de perçage consommable selon les caractéristiques du préambule de la revendication 1.

Elle concerne également un ensemble comprenant un tel guide de perçage et un élément à fixer à une paroi au moyen de vis de fixation.

### ARRIÈRE-PLAN TECHNOLOGIQUE

Généralement, pour percer une paroi, un opérateur utilise une perceuse munie d'un foret de perçage adéquat. Au cours d'une première étape, il pointe sur la paroi la position du trou de perçage à réaliser, puis, au cours d'une deuxième étape, il positionne l'extrémité du foret contre le point marqué sur la paroi afin d'enfoncer le foret dans la paroi à la position désirée.

L'opérateur peut utiliser, pour pointer la position du trou de perçage sur la paroi et pour initier ce trou de perçage, un pointeau et un marteau. Cependant, sur une paroi fragile ou cassante, telle qu'une paroi carrelée, l'opération de pointage risque d'endommager la paroi par éclatement, défoncement ou rayage de cette dernière. En outre, il arrive que le pointeau glisse le long de la paroi ce qui ne garantie aucune précision dans le positionnement du point marqué sur la paroi.

Au cours de l'opération de perçage, si le trou de perçage n'a pas été initié suffisamment profondément, il arrive que le foret glisse le long de la paroi en l'abîmant. Ce glissement provoque en outre une erreur de positionnement du trou de perçage. Enfin, lors de cette opération de perçage, la rotation du foret peut provoquer l'éclatement ou l'arrachage du revêtement de surface de la paroi (typique du carrelage), ce qui nuit à son esthétique.

Afin de faciliter les opérations de pointage et de perçage de la paroi, le document FR 2 251 397 propose un guide de perçage en forme de bouton dont l'une des faces est revêtue d'un adhésif permettant de coller le guide contre la paroi. Ce guide est perforé d'un trou traversant et est réalisé en plastique dur ou en métal tendre. Pour percer la paroi, l'opérateur marque sur la paroi, par exemple au crayon, la position du trou de perçage à réaliser, puis il colle le guide de perçage sur la paroi de manière que son trou traversant soit disposé en regard du point marqué. L'opérateur peut alors percer la paroi avec le foret en étant guidé par le trou traversant.

Toutefois, la dureté d'un tel guide de perçage ne permet de coller ce dernier que sur les seules parois parfaitement planes. En effet, si la paroi est légèrement courbée, l'adhésif ne peut pas parfaitement adhérer à la paroi, ce qui risque de provoquer le décollement du guide lors de l'opération de perçage.

On connaît également du document FR 2 884 160 un guide de perçage souple et épais, présentant en son centre un trou traversant pour guider un foret de perçage selon le préambule de la revendication 1.

Toutefois, le positionnement précis du guide sur la paroi est malcommode dans la mesure où le trou traversant présente un petit diamètre qui ne rend pas la visée du point marqué très aisée. En effet, lorsque l'opérateur approche le guide de la paroi, l'ombre du guide assombrit la paroi et il n'est alors plus possible de repérer, au travers du trou traversant du guide, le point marqué sur la paroi. Le guide est alors collé sur la paroi « au jugé », ce qui nuit à la précision du positionnement du trou de perçage. Par ailleurs, une fois collé sur la paroi, le guide de perçage cache à l'opérateur le trou qu'il réalise, si bien que l'opérateur ne peut pas vérifier la qualité de son travail durant l'opération de perçage.

### OBJET DE L'INVENTION

Afin de remédier aux inconvénients précités de l'état de la technique, la présente invention propose un nouveau guide de perçage qui est plus aisé à positionner sur la paroi, qui facilite le perçage de cette paroi et qui permet d'éviter de la dégrader.

Plus particulièrement, on propose selon l'invention un guide de perçage selon les caractéristiques de la revendication 1.

Ainsi, grâce à l'invention, la transparence ou la translucidité du substrat et de l'adhésif permettent à l'opérateur de voir, au travers du guide, la position de point marqué sur la paroi. L'opérateur peut donc facilement et précisément positionner le guide de sorte que son trou traversant soit disposé en regard du point marqué de la paroi. En outre, durant l'opération de perçage, cette transparence permet à l'opérateur de surveiller la qualité du trou qu'il réalise dans la paroi. Les opérations de positionnement du guide et de perçage étant facilitées, leurs durées de mises en oeuvre sont donc réduites.

La souplesse du substrat permet en outre au guide de perçage d'épouser la forme de la paroi à percer de manière que l'adhésif puisse parfaitement adhérer à la paroi, même si cette dernière n'est pas parfaitement plane. Cette souplesse permet en outre d'amortir les chocs engendrés par le foret de manière à protéger la paroi lors de son perçage. Elle permet en particulier d'éviter l'éclatement de la paroi lorsque cette dernière est carrelée. Le guide de perçage a donc pour effet d'amortir les vibrations issues du foret.

Par ailleurs, dans les parois de type placoplâtre ou celles de faibles épaisseurs, il arrive qu'en fin de perçage, l'extrémité du foret entre dans un espace vide. Un effort important étant exercé par l'opérateur sur le mandrin du foret, le foret s'enfonce alors rapidement dans l'espace vide de manière que le mandrin vient accidentellement impacter la face avant de la paroi. Dans ce cas, le guide de perçage amortit le choc du mandrin contre la paroi, ce qui évite d'abîmer cette dernière.

Si le substrat est choisi trop épais, il ne peut pas se déformer afin d'épouser la forme de la paroi à percer, de sorte qu'il adhère mal à la paroi. En revanche, s'il est choisi trop fin, il ne peut plus correctement assurer sa fonction de guide de perçage. Ainsi, contrôler que le rapport entre dureté et épaisseur du substrat reste dans cette fourchette de valeurs revendiquée permet de s'assurer que le guide de perçage est suffisamment souple et qu'il est apte à correctement guider le foret.

Selon une première caractéristique avantageuse du guide de perçage conforme à l'invention, l'adhésif comporte un film autocollant double face perforé d'une ouverture située dans le prolongement de chaque trou traversant du substrat.

Ainsi, lorsque l'opérateur engage le foret dans le trou traversant du substrat, le foret en rotation ne se colle pas au film autocollant, ce qui aurait pour conséquence néfaste de décoller le guide de perçage de la paroi et d'entraîner ce dernier en rotation avec le foret.

Selon une autre caractéristique avantageuse de l'invention, le substrat présente une épaisseur à la périphérie de chaque trou traversant qui est comprise entre 1,5 et 4 millimètres.

Ainsi, le substrat présente une épaisseur suffisante pour correctement guider le foret lors de l'amorçage de l'opération de perçage.

Selon une autre caractéristique avantageuse de l'invention, chaque trou traversant présente un diamètre qui, exprimé en millimètres, est compris entre 0,5 et 2 fois l'épaisseur moyenne du substrat exprimée en millimètres.

Plus le diamètre du foret utilisé est grand, plus l'épaisseur du guide doit être importante de manière que le foret soit correctement guidé lors de l'amorçage de l'opération de perçage. Ainsi, contrôler que le rapport entre le diamètre du trou traversant et l'épaisseur du substrat reste dans cette fourchette de valeurs permet de s'assurer que le guide de perçage est apte à correctement guider le foret.

Selon une autre caractéristique avantageuse de l'invention, l'adhésif présente un coefficient d'adhérence compris entre 5,7 et 8,7 Newton par centimètre carré.

Ainsi, l'adhésif présente une adhérence suffisamment grande pour assurer le maintien du guide contre la paroi lors du perçage de cette dernière, sans être toutefois trop importante de manière que l'opérateur puisse facilement décoller le guide de perçage à l'issue de l'opération de perçage. Cette adhérence doit en particulier présenter une valeur modérée pour éviter, sur une paroi peinte, l'arrachement de la peinture lors du décollement du guide de perçage. A cet effet, le coefficient d'adhérence de l'adhésif du guide de perçage peut être choisi en fonction du type de la paroi sur laquelle il est destiné à être collé.

Selon une autre caractéristique avantageuse de l'invention, l'adhésif est appliqué autour de chaque trou traversant du substrat sur une surface dont l'aire est comprise entre 300 et 500 millimètres carrés.

Lors de l'opération de perçage, les poussières issues du trou de perçage sont retenues entre la paroi et le guide de perçage qui a donc tendance à se décoller progressivement de la paroi. Ici, la surface de collage reste suffisamment étendue pour prévenir tout décollement du guide sans être toutefois trop grande, de manière que le guide de perçage puisse présenter de faibles dimensions et soit peu encombrant.

Avantageusement, le substrat présente un unique trou traversant dont l'axe passe par le centre de ladite face de collage.

En variante, le substrat comporte au moins un bord rectiligne et au moins deux trous traversants alignés selon une direction parallèle ou orthogonale audit bord rectiligne.

Ainsi, les trous traversant sont alignés le long (ou perpendiculairement) du bord rectiligne du guide. De cette manière, orienter le bord rectiligne du guide de perçage selon une direction connue permet de simultanément orienter les trous de perçage selon cette même direction. Il est alors par exemple possible de réaliser des trous de perçage parfaitement alignés horizontalement ou verticalement, en collant au préalable le guide de perçage sur la paroi à l'aide d'un niveau à bulle positionné contre le bord rectiligne du guide.

L'invention concerne également un ensemble qui comprend, d'une part, un élément ayant un socle de fixation à une paroi pourvu d'au moins deux alésages aptes à accueillir des vis de fixation de l'élément à cette paroi, et, d'autre part, un tel guide de perçage présentant une pluralité de trous traversants qui, lorsque le guide de perçage est convenablement rapporté sur le socle, sont situés en regard des alésages.

Généralement, un élément à fixer sur une paroi, tel que par exemple une lampe, un miroir ou un porte-serviettes, comporte plusieurs alésages, de manière que l'élément puisse être fixé rigidement à la paroi. Les alésages présentant des positions précises les uns par rapport aux autres, il convient de réaliser des trous de perçage dans la paroi à des positions correspondantes, de manière que les vis de fixation engagées dans les alésages puissent toutes s'insérer dans des trous de perçage correspondants.

Grâce à l'invention, le guide de perçage, qui est fourni avec l'élément à fixer à la paroi, présente des trous traversants positionnés les uns par rapport aux autres de la même manière que les alésages de l'élément à fixer. Ainsi, lors de l'opération de perçage, il suffit de percer les trous de perçage au niveau des trous traversants du guide pour que les trous de perçage présentent des positions adéquates. De cette manière, il existe ensuite une position de l'élément par rapport à la paroi dans laquelle ses alésages sont tous situés en regard d'un trou de perçage.

L'invention concerne aussi un ensemble comportant un élément ayant un socle de fixation à une paroi pourvu d'au moins deux alésages aptes à accueillir des vis de fixation de l'élément à cette paroi, au moins deux guides de perçage du type précité associés chacun à un alésage dudit élément, et un gabarit de perçage à appliquer sur la paroi, comportant au moins deux fenêtres d'accueil desdits guides de perçage qui, lorsque le gabarit de perçage est convenablement rapporté sur le socle de fixation, sont situées en regard des alésages.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue de face d'un premier mode de réalisation d'un guide de perçage selon l'invention ;
- la figure 2 est une vue en perspective du guide de perçage de la figure 1 ;
- la figure 3 est une vue de face d'un deuxième mode de réalisation du guide de perçage selon l'invention ;
- la figure 4 est une vue en perspective du guide de perçage de la figure 3;
- la figure 5 est une vue en perspective d'un troisième mode de réalisation du guide de perçage selon l'invention, positionné sur une paroi percée d'une ouverture ; et
- la figure 6 est une vue en perspective d'une lampe à fixer sur la paroi de la figure 5.

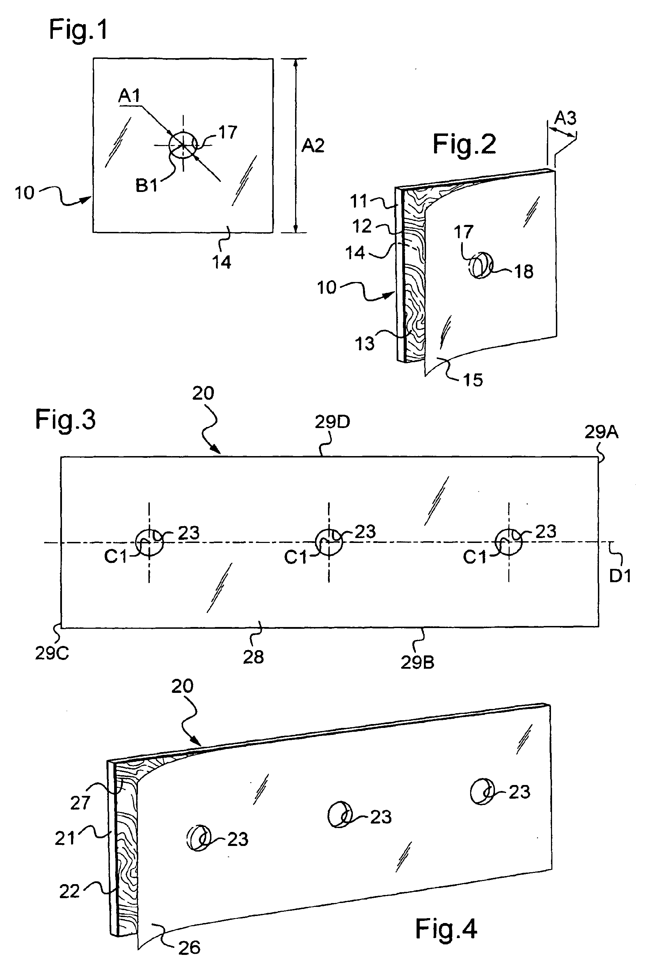

Sur les figures 1 à 5, on a représenté des guides de perçage 10, 20, 30 consommables adaptés à être collés sur une paroi afin de guider un foret, jusqu'à ce que celui-ci s'engage dans la paroi pour réaliser un trou de perçage à un emplacement prédéterminé. Ces guides de perçage sont consommables en ce sens qu'ils sont prévus pour être utilisés une seule fois et pour être ensuite mis au rebut. Ils permettent en outre de protéger la paroi des vibrations et des chocs.

Comme le montrent les figures 2, 4 et 5, ces guides de perçage 10, 20, 30 comportent un substrat 11, 21, 31, formé par une plaque d'épaisseur homogène, et un adhésif 12, 22, 32, formé par un film autocollant double face qui est appliqué sur l'ensemble de l'une des deux faces du substrat, appelée face de collage 13, 27, 37.

Le substrat 11, 21, 31 présente une épaisseur ici égale à 3 millimètres. Il est perforé d'au moins un trou traversant 17, 23, 33 qui débouche sur sa face de collage 13, 27, 37, orthogonalement à cette dernière. En correspondance, l'adhésif 12, 22, 32 est perforé d'une ouverture 18 située en regard de chaque trou traversant du substrat.

Selon une caractéristique particulièrement avantageuse de l'invention, le substrat 11, 21, 31 est souple et transparent, à l'instar de l'adhésif 12, 22, 32 qui est lui aussi transparent. Plus précisément, le substrat et l'adhésif présentent ensemble une transparence globale supérieure à 80%.

Le substrat 11, 21, 31 est ici réalisé dans un matériau du type PVC souple. Un tel PVC est commercialisé par la société Extruflex sous la marque « Transflex Standard ». Il présente une dureté Shore de 75 et une résistance au déchirement supérieure à 50 déca-Newton par centimètre cube. Il est préférentiellement réalisé par moulage puis découpé à la forme souhaitée par jet d'eau ou par emporte-pièce.

Bien sûr, en variante, le substrat pourrait être réalisé dans d'autres matériaux souples et transparents, tels que l'élastomère ou le caoutchouc.

Le film autocollant double face 12, 22, 32 est ici du type de celui commercialisé par la société Rubans de Normandie sous la marque ProLINK350LE. Il présente un coefficient d'adhérence au PVC qui est égal à 26 Newton pour 25 millimètres et, à température ambiante, une résistance au cisaillement de l'ordre de 45 Newton pour 625 millimètres carrés. Ses propriétés physiques sont prévues pour rester inchangées jusqu'au-delà de deux ans.

Cet adhésif permet ainsi aux guides de perçage 10, 20, 30 de pouvoir être collés sur tout type de parois propres (dépoussiérées et dégraissées), en particulier sur le carrelage, la pierre, le béton, le plastique, le métal, le verre, le bois, le placoplâtre et tout autre type de matériaux de synthèse.

L'adhésif 12, 22, 32 est posé sur la face de collage du substrat, avant la découpe de celui-ci, par mélaminage. Il est en outre recouvert, du côté opposé au substrat, d'un opercule 15, 26 qui est ici transparent. Cet opercule sert de revêtement protecteur destiné à empêcher l'adhésif de coller accidentellement à un objet quelconque avant que le guide de perçage soit mis en place sur l'emplacement prédéterminé de la paroi.

Bien sûr, en variante, l'adhésif pourrait être constitué par d'autres moyens de fixation du substrat à la paroi, tels qu'une simple colle transparente adaptée à coller au PVC sans toutefois réagir chimiquement avec ce dernier.

En résumé, les guides de perçage 10, 20, 30 sont tous conçus de manière à être fabriqués avec des prix de revient faibles, ce qui permet de le jeter après une seule utilisation.

Dans un premier mode de réalisation de l'invention représenté sur les figures 1 et 2, le substrat 11 du guide de perçage 10 présente un unique trou traversant 17.

Dans ce mode de réalisation, le substrat 11 présente une forme carrée, avec une face avant 14 et une face arrière 13 correspondant à sa face de collage. La longueur des côtés de ce carré est ici égale à 20 millimètres. Le trou traversant perfore alors le substrat selon un axe B1 qui passe par le centre de la face de collage 13, c'est-à-dire par l'intersection des diagonales du carré formé par le substrat 11.

En variante, le substrat peut présenter tout autre type de forme. Dans ce cas, l'axe du trou traversant est prévu pour passer par le barycentre de la face de collage du substrat.

Quoi qu'il en soit, le trou traversant 17 présente ici un diamètre égal à 3 millimètres. Le guide de perçage 10 est alors plus particulièrement adapté à guider des forets de perçage de diamètres supérieurs, compris ici entre 3 et 6 millimètres. Au-delà de ces diamètres de forets, on peut prévoir des guides de perçage de dimensions plus grandes, présentant des trous traversant de plus grands diamètres et des épaisseurs éventuellement plus élevées. En deçà de ces diamètres de forets, on peut également prévoir des guides de perçage de dimensions plus petites, présentant des trous traversant de plus petits diamètres et des épaisseurs éventuellement moins élevées.

Le procédé d'utilisation de ce guide de perçage 10 pour percer un trou de perçage dans la paroi est le suivant.

Au cours d'une première étape, l'opérateur nettoie la surface de la paroi puis marque, au moyen d'un crayon, une croix sur la paroi indiquant la position à laquelle il désire réaliser un trou de perçage.

Au cours d'une deuxième étape, l'opérateur découvre l'adhésif 12 du guide de perçage 10 en retirant l'opercule 15. Puis, il plaque le guide de perçage 10 contre la paroi en veillant, grâce à la transparence du substrat 11 et de l'adhésif 12, à ce que le centre de la croix marquée sur la paroi soit disposé dans l'axe B1 du trou traversant 17. Il presse ensuite le guide de perçage contre la paroi de manière à ce que l'adhésif colle parfaitement à cette dernière.

Au cours d'une troisième étape, l'opérateur se munit d'une perceuse et il engage le foret de la perceuse dans le trou traversant 17 du substrat 11. Le foret étant en rotation, il perce dans le guide de perçage 10 un trou dont le diamètre correspond au diamètre du trou à obtenir, et d'axe confondu avec l'axe du trou traversant 17. En effet, la paroi cylindrique du trou traversant 17 a non seulement pour effet de maintenir latéralement le foret en regard de la croix marquée sur la paroi, mais aussi de le maintenir axialement dans l'axe du trou traversant. Ainsi, lorsque le foret s'engage dans la paroi elle-même, l'opérateur est assuré de réaliser un trou de perçage d'axe normal à la paroi, qui est situé au niveau précis de la croix.

Le substrat étant souple et élastique, la paroi latérale du trou percé dans le guide de perçage par le foret a tendance à se resserrer autour du foret. De cette manière, lors du percement de la paroi, les poussières issues du trou de perçage s'accumulent entre la paroi et le guide de perçage 10, autour du trou traversant 17. Le guide de perçage 10 évite ainsi l'apparition d'un nuage de poussières gênant pour l'opérateur.

En outre, si la paroi est du type carrelé ou plastique, le guide de perçage plaqué contre la paroi évite toute fissure ou éclat de la paroi. Si la paroi est en pierre ou en verre, le guide de perçage ne gêne nullement la lubrification du foret de perçage. Au contraire, il retient le lubrifiant dans le trou de perçage. Si la paroi est en métal, l'utilisation de ce guide dispense l'opérateur de la difficile opération préalable de pointage de la paroi au moyen d'un pointeau et d'un marteau.

Au cours d'une quatrième et dernière étape, l'opérateur désengage le foret du trou de perçage et décolle le guide de perçage de la paroi. Ce décollement est d'autant plus aisé que les poussières ont déjà commencées à décoller le guide de perçage 10 de la paroi.

Dans un deuxième mode de réalisation du guide de perçage 20 représenté sur les figures 3 et 4, le substrat 21 comporte trois trous traversants 23 alignés selon une direction D1. Plus précisément, les axes C1 de ces trous traversants 23 sont tous perpendiculaires (c'est-à-dire orthogonaux et sécants) à une même droite s'étendant selon la direction D1.

Dans ce mode de réalisation, le substrat présente une forme rectangulaire, avec une face avant 28, une face arrière 27 correspondant à sa face de collage 27, et quatre bords rectilignes 29A, 29B, 29C, 29D. La longueur de ce rectangle est ici égale à 100 millimètres tandis que sa largeur est de 20 millimètres. Un des trous traversants 23 perfore le substrat au centre de sa face de collage 27, tandis que les deux autres trous traversants 27 le perforent de part et d'autre de ce premier trou, à 10 millimètres de ses petits bords rectilignes 29A, 29C.

Le procédé d'utilisation de ce guide de perçage 20 pour percer trois trous de perçage dans la paroi est similaire au procédé précédemment décrit.

Au cours d'une première étape, l'opérateur marque, au moyen d'un crayon, une croix sur la paroi indiquant la position à laquelle il désire réaliser l'un des trois trous de perçage, par exemple le trou central.

Au cours d'une deuxième étape, l'opérateur découvre l'adhésif 22 du guide de perçage 20 en retirant l'opercule 26. Puis, il plaque le guide de perçage 20 contre la paroi en veillant à positionner ses trous traversants 27 horizontalement les uns à côté des autres (ou verticalement les uns au-dessus des autres). A cet effet, il utilise un niveau à bulle qu'il positionne contre l'un des bords rectilignes du guide de perçage 20, puis il colle le guide en contrôlant que le niveau indique bien que le bord rectiligne est à l'horizontale (ou à la verticale). Grâce à la transparence du substrat 21 et de l'adhésif 22, l'opérateur peut en outre facilement vérifier qu'il colle le guide de perçage 20 de manière que le centre de la croix marquée sur la paroi est disposé dans l'axe du trou traversant 23 central. L'opérateur presse ensuite le guide de perçage 20 contre la paroi de manière à ce que l'adhésif colle parfaitement à cette dernière.

Au cours d'une troisième étape, l'opérateur perce successivement les trois trous de perçage sans décoller le guide de la paroi. La position des trois trous traversants 23 du guide de perçage 20 permet à l'opérateur de s'assurer que les trois trous de perçage seront réalisés selon des axes parallèles les uns aux autres et qu'ils seront parfaitement alignés les uns à côté des autres (ou les uns au-dessus des autres).

Au cours d'une quatrième et dernière étape, l'opérateur désengage le foret du dernier trou de perçage et décolle le guide de perçage de la paroi.

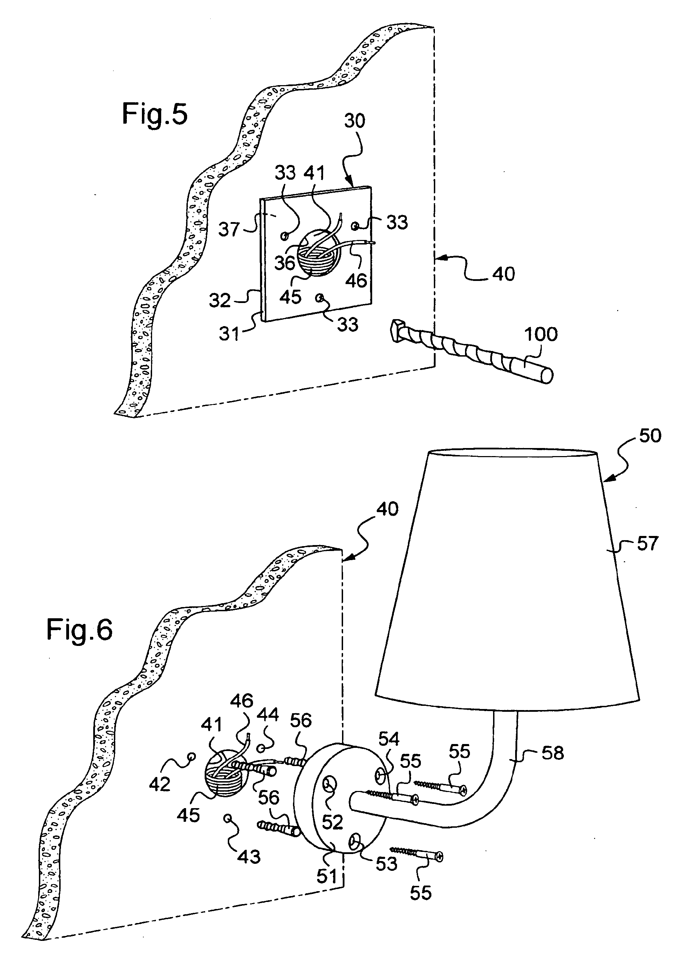

Le troisième mode de réalisation de l'invention représenté sur les figures 5 et 6 concerne quant à lui un ensemble comportant, d'une part, un élément 50 à fixer à une paroi 40, et, d'autre part, un guide de perçage 30 associé à cet élément 50.

L'élément 50 est ici constitué par une lampe comportant un abat-jour 57, un pied 58 courbé à angle droit et, à l'extrémité de ce pied, un socle 51 à fixer à la paroi. Ce socle 51 présente ici une forme de cylindre de faible hauteur dont le centre d'une extrémité est raccordé au pied 58. Ce socle 51 est percé de trois alésages 52, 53, 54 qui présentent des axes parallèles à l'axe du cylindre et qui sont régulièrement répartis autour du pied 58, sur un cercle d'axe confondu avec l'axe du cylindre.

Le substrat 31 du guide de perçage 30 présente une forme carrée de largeur égale au diamètre du socle 51. Le substrat présente en particulier un bord de référence, ici le bord supérieur, qui peut être positionné horizontalement à l'aide d'un niveau à bulle. Ce substrat comporte trois trous traversants 33 dont les centres sont inscrits dans un cercle. Ce cercle présente un centre situé à l'intersection des diagonales du carré, et un diamètre égal au diamètre du cercle dans lequel sont inscrits les centres des alésages 52, 53, 54 du pied 51. De cette manière, si on positionne le guide de perçage 30 contre l'extrémité du socle 51, ses trois trous traversants 33 sont situés en regard des alésages 52, 53, 54 du socle 51.

Ici, le guide de perçage comporte en outre une grande ouverture centrale 36, dont le centre est situé à l'intersection des diagonales du carré formé par le substrat 31.

Le procédé d'utilisation de ce guide de perçage 30 pour percer trois trous de perçage 42, 43, 44 dans une paroi 40 est similaire au procédé précédemment décrit. Ici, la paroi 40 comporte une ouverture 41 par laquelle fait saillie une gaine électrique 45 dans laquelle sont insérés des fils électriques 46.

Au cours d'une première étape, l'opérateur découvre l'adhésif 32 du guide de perçage 30 en retirant son opercule. Puis, il plaque le guide de perçage 30 contre la paroi 40 en veillant à ce que, d'une part, son ouverture centrale 36 soit disposée dans l'axe de l'ouverture 41 de la paroi 40, et, d'autre part, son bord supérieur soit disposé horizontalement. Il peut par exemple contrôler cette horizontalité à l'aide d'un niveau à bulle plaqué contre ce bord supérieur. Ensuite, l'opérateur presse le guide de perçage 30 contre la paroi de manière à ce que l'adhésif colle parfaitement à cette dernière.

Au cours d'une seconde étape, l'opérateur engage successivement le foret 100 dans chacun des trous traversants 33 du guide de perçage 30 pour percer trois trous de perçage 42, 43, 44. Les trois trous traversants 33 du guide de perçage 30 permettent alors de s'assurer que les trois trous de perçage seront réalisés selon des axes parallèles les uns aux autres et qu'ils seront tous disposés en regard de l'un des alésages 52, 53, 54 du socle 51 de la lampe 50.

Au cours d'une troisième étape, l'opérateur désengage le foret 100 du dernier trou de perçage et décolle le guide de perçage 30 de la paroi 40.

Enfin, au cours d'une quatrième et dernière étape, l'opérateur engage trois chevilles 56 dans les trois trous de perçage 42, 43, 44, puis il positionne le socle 51 du pied de lampe contre la paroi, de sorte que ses alésages soient disposés en vis-à-vis des trous de perçage de la paroi 40. Il raccorde ensuite les fils électriques 46 à des connecteurs électriques de la lampe 50 puis il visse le socle 51 contre la paroi 40 au moyen de trois vis de fixation 55.

En variante, le guide de perçage peut être laissé en place entre le socle et la paroi pour servir de joint. Dans cette variante, le substrat sera préférentiellement réalisé en élastomère ou en caoutchouc.

Un autre mode de réalisation de l'invention non représenté sur les figures concerne quant à lui un ensemble comportant, de première part, un élément à fixer à une paroi au moyen de deux vis de fixation distantes de par exemple 20 centimètres, de deuxième part, deux guides de perçage du type de celui représenté sur les figures 1 et 2, et, de troisième part, un gabarit de perçage.

L'élément à fixer comporte ici un socle pourvu de deux alésages d'accueil de vis de fixation. Le gabarit de perçage est quant à lui constitué par une feuille de carton (ou de plastique souple) apte à être appliquée sur la paroi et comportant deux fenêtres carrées d'accueil desdits guides de perçage. Ces fenêtres présentent des positions relatives prédéterminées de sorte que, lorsque le gabarit de perçage est convenablement rapporté sur le socle de l'élément à fixer à la paroi, les fenêtres sont situées en regard des alésages.

Pour percer deux trous de perçage dans la paroi, l'opérateur scotche, à la position désirée, le gabarit sur la paroi. Puis, il découvre les adhésifs des guides de perçage et insèrent ces derniers au travers des fenêtres du gabarit pour les coller sur la paroi. Il retire ensuite le gabarit de la paroi et procède au perçage de la paroi selon un procédé identique à celui décrit dans le premier mode de réalisation de l'invention. Enfin, il engage des chevilles dans les trous percés puis visse l'élément à fixer contre la paroi au moyen de deux vis de fixation.

Un autre mode de réalisation de l'invention non représenté sur les figures concerne quant à lui un ensemble comportant, d'une part part, deux guides de perçage du type de celui représenté sur les figures 1 et 2, et, d'autre part, un calibre de perçage.

Ce calibre de perçage présente une forme allongée avec, à chacune de ses extrémités, une ouverture d'accueil d'un des guides de perçage. Il intègre en outre un niveau à bulle permettant de positionner les guides de perçage l'un à côté de l'autre et/ou l'un au-dessus de l'autre, en s'assurant de leur alignement selon un axe horizontal et/ou vertical. Ce calibre, tel un vernier, est en outre réalisé en deux parties coulissantes l'une par rapport à l'autre et comporte des moyens de mesure de la distance séparant les centres de ses deux fenêtres. Il permet ainsi de positionner les guides de perçage l'un par rapport à l'autre, avec un entraxe déterminé.

Pour percer deux trous de perçage dans la paroi, l'opérateur règle l'entraxe du calibre puis positionne ce dernier contre la paroi, en s'assurant de sa position horizontale ou verticale. Puis, il découvre les adhésifs des guides de perçage et insèrent ces derniers au travers des fenêtres du calibre pour les coller sur la paroi. Il retire ensuite le calibre de la paroi et procède au perçage de la paroi selon un procédé identique à celui décrit dans le premier mode de réalisation de l'invention.

## Revendications

1. Guide de perçage (10 ; 20 ; 30) consommable comportant un substrat (11 ; 21 ; 31) souple et épais qui présente au moins un trou traversant (17 ; 23, 24, 25 ; 33, 34, 35) débouchant sur une face de collage (13 ; 27) du substrat (11 ; 21 ; 31), et un adhésif (12 ; 22 ; 32) appliqué sur au moins une partie de ladite face de collage (13 ; 27), **caractérisé en ce que** le substrat (11 ; 21 ; 31) présente une dureté Shore telle que le produit de la dureté Shore par l'épaisseur moyenne du substrat (11 ; 21 ; 31) exprimée en millimètres est compris entre 180 et 300 est et **en ce que** l'adhésif (12 ; 22 ; 32) et le substrat (11 ; 21 ; 31) sont translucides ou transparents.

2. Guide de perçage selon la revendication précédente, dans lequel l'adhésif (12 ; 22 ; 32) comporte un film autocollant double face perforé d'une ouverture (18) située dans le prolongement de chaque trou traversant (17 ; 23, 24, 25 ; 33, 34, 35) du substrat (11 ; 21 ; 31).

3. Guide de perçage selon l'une des revendications précédentes, dans lequel le substrat (11 ; 21 ; 31) présente une épaisseur (A3) à la périphérie de chaque trou traversant (17 ; 23, 24, 25 ; 33, 34, 35) qui est comprise entre 1,5 et 4 millimètres.

4. Guide de perçage selon l'une des revendications précédentes, dans lequel chaque trou traversant (17 ; 23, 24, 25 ; 33, 34, 35) présente un diamètre (A1) qui, exprimé en millimètres, est compris entre 0,5 et 2 fois l'épaisseur moyenne du substrat (11 ; 21 ; 31) exprimée en millimètres.

5. Guide de perçage selon l'une des revendications précédentes, dans lequel l'adhésif (12 ; 22 ; 32) présente un coefficient d'adhérence au PVC compris entre 5,7 et 8,7 Newton par centimètre carré.

6. Guide de perçage selon l'une des revendications précédentes, dans lequel l'adhésif (12 ; 22 ; 32) est appliqué autour de chaque trou traversant (17 ; 23, 24, 25 ; 33, 34, 35) du substrat (11 ; 21 ; 31) sur une surface dont l'aire est comprise entre 300 et 500 millimètres carrés.

7. Guide de perçage selon l'une des revendications précédentes, dans lequel le substrat (11) présente un unique trou traversant (17) dont l'axe (B1) passe par le centre de ladite face de collage (13).

8. Guide de perçage selon l'une des revendications 1 à 6, dans lequel le substrat (21) comporte au moins un bord rectiligne (29A, 29B, 29C, 29D) et au moins deux trous traversants (23, 24, 25) alignés selon une direction (D1) parallèle ou orthogonale audit bord rectiligne (29A, 29B, 29C, 29D).

9. Ensemble comportant, d'une part, un élément (50) ayant un socle (51) de fixation à une paroi (40) pourvu d'au moins deux alésages (52, 53, 54) aptes à accueillir des vis de fixation (55) de l'élément (50) à cette paroi (40), et, d'autre part, un guide de perçage (30) selon l'une des revendications 1 à 6 présentant une pluralité de trous traversants (33, 34, 35) qui, lorsque le guide de perçage (30) est convenablement rapporté sur le socle (51), sont situés en regard des alésages (52, 53, 54).

10. Ensemble comportant :
- un élément ayant un socle de fixation à une paroi pourvu d'au moins deux alésages aptes à accueillir des vis de fixation de l'élément à cette paroi,
- au moins deux guides de perçage selon l'une des revendications 1 à 6 associés chacun à un alésage dudit élément, et
- un gabarit de perçage à appliquer sur la paroi, comportant au moins deux fenêtres d'accueil desdits guides de perçage qui, lorsque le gabarit de perçage est convenablement rapporté sur le socle de fixation, sont situées en regard des alésages.

## Claims

1. An consumable drilling guide (10; 20; 30) comprising a flexible and thick substrate (11; 21; 31) that presents at least one through hole (17; 23, 24, 25; 33, 34, 35) opening out into a bonding face (13; 27) of the substrate (11; 21; 31), and an adhesive (12; 22; 32) applied over at least a portion of said bonding face (13; 27), the drilling guide being **characterized in that** the substrate (11; 21; 31) presents hardness on the Shore scale such that the product of the Shore hardness multiplied by the mean thickness of the substrate (11; 21; 31) expressed in millimeters lies in the range 180 to 300, and **in that** the adhesive (12; 22; 32) and the substrate (11; 21; 31) are translucent or transparent.

2. A drilling guide according to the preceding claim, wherein the adhesive (12; 22; 32) comprises a double-sided adhesive film perforated by a respective opening (18) situated in line with each through hole (17; 23, 24, 25; 33, 34, 35) in the substrate (11; 21; 31).

3. A drilling guide according to either preceding claim, wherein the substrate (11; 21; 31) presents thickness (A3) at the periphery of each through hole (17; 23, 24, 25; 33, 34, 35) that lies in the range 1.5 millimeters to 4 millimeters.

4. A drilling guide according to any preceding claim, wherein each through hole (17; 23, 24, 25; 33, 34, 35) presents a diameter (A1) that, expressed in millimeters, lies in the range 0.5 to 2 times the mean thickness of the substrate (11; 21; 31) expressed in millimeters.

5. A drilling guide according to any preceding claim, wherein the adhesive (12; 22; 32) presents a coefficient of adhesion with PVC that lies in the range 5.7 newtons per square centimeter to 8.7 newtons per square centimeter.

6. A drilling guide according to any preceding claim, wherein the adhesive (12; 22; 32) is applied around each through hole (17; 23, 24, 25; 33, 34, 35) of the substrate (11; 21; 31), over a surface of area that lies in the range 300 square millimeters to 500 square millimeters.

7. A drilling guide according to any preceding claim, wherein the substrate (11) presents a single through hole (17) of axis (B1) passing through the center of said bonding face (13).

8. A drilling guide according to any one of claims 1 to 6, wherein the substrate (21) includes at least one rectilinear edge (29A, 29B, 29C, 29D) and at least two through holes (23, 24, 25) in alignment on a direction (D1) parallel with or orthogonal to said rectilinear edge (29A, 29B, 29C, 29D).

9. An assembly comprising firstly an element (50) having a base (51) for fastening to a wall (40), the base being provided with at least two bores (52, 53, 54) suitable for receiving fastener screws (55) for fastening the element (50) to said wall (40), and secondly a drilling guide (30) according to any one of claims 1 to 6 and presenting a plurality of through holes (33, 34, 35) that are situated in register with the bores (52, 53, 54) when the drilling guide (30) is suitably fitted to the base (51).

10. An assembly comprising:
- an element having a fastener base for fastening to a wall, the base being provided with at least two bores suitable for receiving screws for fastening the element to said wall;
- at least two drilling guides according to any one of claims 1 to 6, each associated with a respective bore of said element; and
- a drilling template for applying to the wall, the template including at least two windows for receiving said drilling guides, which windows are situated in register with the bores when the drilling template is suitably fitted on the fastener base.

## Patentansprüche

1. Wegwerf-Bohrführung (10; 20; 30), die ein flexibles und dickes Substrat (11; 21; 31), das mindestens ein Durchgangsloch (17; 23, 24, 25; 33, 34, 35) aufweist, welches in einer Klebefläche (13; 27) des Substrats (11; 21; 31) mündet, und einen auf mindestens einen Teil der Klebefläche (13; 27) aufgebrachten Klebstoff (12; 22; 32) umfasst, **dadurch gekennzeichnet, dass** das Substrat (11; 21; 31) eine solche Shore-Härte aufweist, dass das Produkt aus der Shore-Härte und der mittleren Dicke des Substrats (11; 21; 31) in Millimetern ausgedrückt zwischen 180 und 300 liegt, und dass der Klebstoff (12; 22; 32) und das Substrat (11; 21; 31) durchscheinend oder transparent sind.

2. Bohrführung nach dem vorhergehenden Anspruch, wobei der Klebstoff (12; 22; 32) einen doppelseitigen selbstklebenden Film umfasst, in dem eine Öffnung (18) ausgebildet ist, die sich in der Verlängerung jedes Durchgangslochs (17; 23, 24, 25; 33, 34, 35) des Substrats (11; 21; 31) befindet.

3. Bohrführung nach einem der vorhergehenden Ansprüche, wobei das Substrat (11; 21; 31) am Umfang jedes Durchgangslochs (17; 23, 24, 25; 33, 34, 35) eine Dicke (A3) zwischen 1,5 und 4 Millimetern aufweist.

4. Bohrführung nach einem der vorhergehenden Ansprüche, wobei jedes Durchgangsloch (17; 23, 24, 25; 33, 34, 35) einen Durchmesser (A1) aufweist, der in Millimetern ausgedrückt zwischen dem 0,5- und dem 2-Fachen der in Millimetern ausgedrückten mittleren Dicke des Substrats (11; 21; 31) beträgt.

5. Bohrführung nach einem der vorhergehenden Ansprüche, wobei der Klebstoff (12; 22; 32) einen Haftwert auf PVC zwischen 5,7 und 8,7 Newton pro Quadratzentimeter aufweist.

6. Bohrführung nach einem der vorhergehenden Ansprüche, wobei der Klebstoff (12; 22; 32) um jedes Durchgangsloch (17; 23, 24, 25; 33, 34, 35) des Substrats (11; 21; 31) herum auf einer Fläche aufgebracht wird, deren Flächeninhalt zwischen 300 und 500 Quadratzentimetern beträgt.

7. Bohrführung nach einem der vorhergehenden Ansprüche, wobei das Substrat (11) ein einziges Durchgangsloch (17) aufweist, dessen Achse (B1) die Mitte der Klebefläche (13) durchquert.

8. Bohrführung nach einem der Ansprüche 1 bis 6, wobei das Substrat (21) mindestens einen geradlinigen Rand (29A, 29B, 29C, 29D) und mindestens zwei Durchgangslöcher (23, 24, 25), die in einer parallel oder orthogonal zu dem geradlinigen Rand (29A, 29B, 29C, 29D) verlaufenden Richtung (D1) ausgerichtet sind, aufweist.

9. Anordnung, die einerseits ein Element (50) mit einer Basis (51) zur Befestigung an einer Wand (40), die mit mindestens zwei Bohrungen (52, 53, 54) versehen ist, welche Schrauben (55) zur Befestigung des Elements (50) an dieser Wand (40) aufnehmen können, und andererseits eine Bohrführung (30) nach einem der Ansprüche 1 bis 6, die mehrere Durchgangslöcher (33, 34, 35) aufweist, welche sich, wenn die Bohrführung (30) angemessen an der Basis (51) befestigt ist, gegenüber den Bohrungen (52, 53, 54) befinden, umfasst.

10. Anordnung, umfassend:
- ein Element mit einer Basis zur Befestigung an einer Wand, die mit mindestens zwei Bohrungen versehen ist, welche Schrauben zur Befestigung des Elements an dieser Wand aufnehmen können,
- mindestens zwei Bohrführungen nach einem der Ansprüche 1 bis 6, die jeweils einer Bohrung des Elements zugeordnet sind, und
- eine Bohrschablone zum Anbringen an der Wand, die mindestens zwei Fenster zur Aufnahme der Bohrführungen aufweist, die sich, wenn die Bohrschablone angemessen an der Befestigungsbasis angebracht ist, gegenüber den Bohrungen befinden.
